# EUROPÄISCHE PATENTANMELDUNG

(11) **EP 0 635 537 A2**
(43) Veröffentlichungstag der Anmeldung: **25.01.1995**
(21) Anmeldenummer: 94110690.8
(22) Anmeldetag: 09.07.1994
(51) Int. Cl.: C08J 9/12, C08J 9/00

(54) **Verfahren zur Herstellung eines Schaumstoffes aus thermoplastischem Kunststoff**

(30) Priorität: 24.07.1993 DE 4324904
(71) Anmelder: Röhm GmbH, D-64293 Darmstadt (DE)
(72) Erfinder: Höss, Werner, D-63150 Heusenstamm (DE); Benz, Volker, Dr., D-64739 Höchst (DE); Müller, Michael, Dr., D-64625 Bensheim (DE)

(57) **Zusammenfassung**

Schaumstoffe aus thermoplastischem Kunststoff werden hergestellt durch Vermischen des Kunststoffes, wie Polymethylmethacrylat oder ein Polymethacrylalkylimid-Polymer, mit Magnesium- und/oder Aluminiumhydroxyd oder Kieselsäure als Treibmittel in der Schmelze und Erhitzen der Mischung bis zum Aufschäumen und Abkühlen unter die Erweichungstemperatur. Gegebenenfalls wird die Mischung unter Druck erhitzt und durch Entspannung aufgeschäumt.

## Beschreibung

Die Erfindung betrifft ein Verfahren zur Herstellung eines als Werkstoff geeigneten Schaumstoffes aus thermoplastischem Kunststoff durch Vermischen des Kunststoffes mit einem Treibmittel in der Schmelze und Erhitzen der Mischung bis zum Aufschäumen und Abkühlen unter die Erweichungstemperatur.

### Stand der Technik

Aus der EP-A 493 783 sind Polycarbonatschaumstoffe bekannt, die aus einer Mischung eines thermoplastischen Polycarbonat-Kunststoffes, eines porenbildenden Zusatzes und eines Hydrats eines anorganischen Salzes durch Erhitzen über die Erweichungstemperatur des Kunststoffes hergestellt werden. Als Salzhydrate eignen sich z.B. kristallwasserhaltige Sulfate des Magnesiums oder Zinks. Beim Erhitzen geben die Salzhydrate Kristallwasser ab, das in Dampfform als Treibmittel wirkt. Die Salzhydrate sind nicht nur besonders billige Treibmittel, sondern wirken sich gleichzeitig als Füllstoffe vorteilhaft auf die mechanischen und die Brandeigenschaften aus.

Wendet man die gleichen Treibmittel zum Verschäumen von anderen Kunststoffen, vor allem solchen von geringerer Zähigkeit und höherer Sprödigkeit, wie Polymethylmethacrylat oder Polymethacrylalkylimiden, an, so erhält man Schaumstoffe, die - vor allem an feuchter Luft - allmählich korrodieren. Diese Erscheinung ist wahrscheinlich darauf zurückzuführen, daß die beim Erhitzen entwässerten Salze unter Rückbildung der Salzhydrate und unter Volumenvergrößerung wieder Wasser aufnehmen.

Es ist bekannt, elastomere Kunststoffe mit Magnesium- oder Aluminiumhydroxyd als Füllstoff zu versetzen, um ihre Brennbarkeit zu vermindern und die Rauchentwicklung bei Brandbelastung herabzusetzen (EP-A 204 453). Die Mischung wird bei Temperaturen unter 200°C thermoplastisch verarbeitet, wo noch keine Zersetzung der Füllstoffe eintritt. Nach JP-A 89/156 378 (Chem. Abstr. 112, 38213) werden brandschützende Überzüge für Holz aus einem thermoplastischen Kunststoff mit einem Gehalt an Aluminiumhydroxyd und einem Treibmittel hergestellt. Bei Brandbelastung schäumt der Überzug auf und schützt das Holz vor Erhitzung und Entzündung; der entstehende Schaumstoff hat demnach keinen Werkstoffcharkter.

### Aufgabe und Lösung

Der Erfindung liegt die Aufgabe zugrunde, zum Verschäumen von thermoplastischen Kunststoffen zu Schaumwerkstoffen Treibmittel zu finden, die gleichartige Vorteile bieten wie die erwähnten Salzhydrate, aber nicht wie diese zur Korrosion des Schaumstoffes an feuchter Luft führen.

Es wurde gefunden, daß Magnesium- und Aluminiumhydroxyd und Kieselsäure beim Erhitzen auf 230°C oder darüber Wasser in Dampfform abgeben und die Kunststoffschmelze aufschäumen. Aus den eingesetzten Hydroxyden bzw. der Kieselsäure entstehen wasserärmere Oxide und Oxidhydrate, die nicht oder nur in unbedeutendem Maße zu erneuter Wasseraufnahme neigen. Auf die mechanischen und Brandeigenschaften wirken sie sich ähnlich vorteilhaft aus wie die oben erwähnten Salzhydrate.

Gegenstand der Erfindung ist daher ein Verfahren zur Herstellung eines Schaumstoffes aus thermoplastischem Kunststoff durch Vermischen des Kunststoffes mit Magnesium- und/oder Aluminiumhydroxyd oder Kieselsäure als Treibmittel in der Schmelze und Erhitzen der Mischung bis zum Aufschäumen und Abkühlen unter die Erweichungstemperatur. Ein weiterer Erfindungsgegenstand ist der auf diese Weise hergestellte Schaumstoff.

Im Gegensatz zu bekannten Zusammensetzungen, die in einem thermoplastischen Kunststoff neben Aluminiumhydroxyd noch Treibmittel enthalten, wird erfindungsgemäß das Magnesium- und/oder Aluminiumhydroxyd oder die Kieselsäure im wesentlichen als alleiniges Treibmittel verwendet. Jedenfalls üben andere Bestandteile, wie etwa in dem schäumbaren Material enthaltenes Wasser oder verdampfbare organische Flüssigkeiten, höchstens einen vernachlässigbaren Anteil am Aufschäumen zu einem Schaumstoff aus.

### Ausführung der Erfindung

Eine Vielzahl von thermoplastischen Kunststoffen kann erfindungsgemäß zu Schaumstoffen mit Werkstoffqualität verarbeitet werden. Geeignet sind thermoplastische Kunststoffe, die bei Raumtemperatur fest und bei Temperaturen von 200 bis 330°C ohne wesentliche Zersetzung thermoplastisch verarbeitbar sind. Besonders bevorzugt sind Polymethylmethacrylat und Polymethacrylalkylimid-Polymere, insbesondere Polymethacrylmethylimid. Weiterhin kommen z.B. Polycarbonate, Polyethersulfone oder Polyamide in Betracht.

Die als Treibmittel verwendeten anorganischen Zusätze geben beim Erhitzen über 200°C, vorzugsweise bei 230 bis 330°C, Wasser in Form von Dampf ab, der das Aufschäumen bewirkt. Magnesium- und Aluminium-hydroxyd haben oft nur näherungsweise die Zusammensetzung Mg(OH)₂ bzw. Al(OH)₃; man verwendet daher auch Formeln wie MgO-(H₂O)ₓ bzw. Al₂O₃-(H₂O)ₓ, wobei x einen nahe bei 1 bzw. 1,5 liegenden Durchschnittswert darstellt, der etwa der thermisch abspaltbaren Wassermenge entspricht. Entsprechendes gilt für die Kieselsäure, die näherungsweise durch die Formel Si(OH)₄ bzw. SiO₂-(H₂O)ₓ wiedergegeben werden kann, wobei hier x nahe bei 2 liegt. Die Kieselsäure kann gegebenenfalls auch teilweise in der Salzform vorliegen, vorausgesetzt, daß beim Erhitzen kein hygroskopischer Rückstand verbleibt; geeignet sind z.B. thermisch dehydratisierbare Calcium-silikat-hydrate. Auch Gemische der genannten Treibmittel können verwendet werden.

Neben dem Treibmittel können Nukleierungsmittel zur Ausbildung einer feinen, gleichmäßigen Porenstruktur vorteilhaft sein. Geeignet sind z.B. Talkum, feine Siliciumdioxid- und Titandioxid-Pulver in Mengen von etwa 0,2 bis 15 Gew.-%.

Vorzugsweise werden Schaumstoffe im Dichtebereich von 100 bis 1500 kg/m³, insbesodere 200 bis 900 kg/m³ erzeugt. Dazu werden 2 bis 50 Gew.-% des Treibmittel, bezogen auf das Gewicht des Kunststoffanteils, eingesetzt. Im fertigen Schaumstoff liegt der Mg-, Al- bzw. Si-Gehalt vorzugsweise bei 0,5 bis 20 Gew.-%.

Die verschäumbare Mischung kann auf verschiedene Art hergestellt werden. Wenn der thermoplastische Kunststoff unterhalb der Zersetzungstemperatur des Treibmittels schmilzt, kann dieses - beispielsweise mit einem Kneter oder einem Extruder - direkt in die Schmelze eingemischt werden. Schmilzt der Kunststoff erst im Zersetzungsbereich des Treibmittels, so mischt man vorzugsweise die Bestandteile in Form trockener Pulver oder Granulate und erhitzt die Mischung unter Druck; dazu eignen sich Schneckenmaschinen. Anschließend läßt man durch Entspannung aufschäumen. Geschieht dies in einer Hohlform, so entsteht ein einzelner Formkörper, der nach dem Abkühlen aus der geöffneten Form entnommen wird. Durch Entspannung in einen Formkanal kann ein kontinuierliches Schaumstoffprofil hergestellt werden. In entsprechende Weise kann das pulverförmige Treibmittel in einem Extruder in die Kunststoffschmelze eingemischt werden. Weiterhin kann eine Mischung der pulverförmigen Ausgangsstoffe in einer Hohlform erhitzt werden, so daß ein den Formhohlraum ausfüllender Schaumstoffkörper entsteht. Um in dieser Weise einen tafelförmigen Schaumstoffkörper herzustellen, ist es vorteilhaft, die eine der Formwände in die Hohlform einzusenken und die pulverförmige Ausgangsmischung damit solange zusammenzupressen, bis die Masse geschmolzen ist. Dann läßt man die Masse durch Aufheben des Pressdruckes expandieren. In allen Fällen entsteht durch Abkühlung unter die Erweichungstemperatur des Kunststoffes der gewünschte Schaumstoff.

Der Werkstoffcharakter des Schaumstoffes kommt in der gleichmäßigen Dichte und Porenstruktur und der definierten räumlichen Gestalt, z.B. als Tafel oder Profil, zum Ausdruck. Nicht immer ist die poröse Struktur selbst von entscheidender Bedeutung für die Werkstoffeigenschaften. Die Anwendung der Erfindung kann beispielsweise den Zweck haben, die Dichte des Werkstoffes, die durch den Gehalt an anorganischen Füllstoffen über den des ungefüllten Kunststoffes steigt, durch eine schwache Aufschäumung wieder in den Bereich typischer Kunststoffdichten zu senken.

Im übrigen eignet sich der erfindungsgemäße Werkstoff für die typischen Einsatzgebiete technischer Schaumstoffe, z.B. im Fahrzeug- und Flugzeugbau, insbesondere als Kernschicht von Verbundwerkstoffen, die Metallbleche oder Kunststoffschichten als Deckschichten enthalten. Solche Deckschichten können unmittelbar beim Aufschäumen aufgebracht werden.

Unter den erfindungsgemäßen Schaumstoffen stellen diejenigen auf der Basis von Polymethacrylalkylimid-Polymeren mit einem Mg-, Al- bzw. Si-Gehalt von 1 bis 10, vorzugsweise 2 bis 5 Gew.-%, besonders hochwertige Konstruktionswerkstoffe dar. Sie sind schwer entflammbar und zeichnen sich durch einen hohen E-Modul, hohe Oberflächenhärte und Druckfestigkeit sowie durch eine hohe Wärmformbeständigkeit (100 bis 140°C) aus. Überraschend ist bei Verwendung von Magnesiumhydroxyd als Treibmittel eine erhöhte Lösemittelbeständigkeit, z.B. Unlöslichkeit in Methylenchlorid, im Vergleich zu der des ungeschäumten Polymethacrylmethylimids.

### BEISPIELE

### Beispiel 1: PMMA-Schaumstoff mit Aluminiumhydroxyd

Auf einer Schäumanlage, bestehend aus einem Einschneckenextruder mit 30 mm Schneckendurchmesser und 32 D Schneckenlänge, zwei gravimetrisch arbeitenden Dosierwaagen, einer Schaumdüse mit nachfolgender Kalibrierung und Raupenabzug, wurde kontinuierlich ein Profil von 30 x 10 mm extrudiert. Über die eine Dosierwaage wurde kontinuierlich ein homogenes Gemisch aus PMMA-Formmasse (PLEXIGLAS®8H) und 2 % Talkum ("Haichen®II", Brenntag Interplast) in einer Menge von 10 kg/h zugeführt; über die andere Dosierwaage wurde 1,5 kg/h Al(OH)₃ ("Apyral®24", Vereinigte Aluminiumwerke) kontinuierlich zugeführt. Nach dem Aufschmelzen und der thermischen Zersetzung des thermolabilen Al(OH)₃ wird durch die Schaumdüse ein Profil 30 x 10 mm geformt, durch eine Vakuum-Wassertank-Kalibrierung abgekühlt und mittels eines Raupenabzugs abgezogen. Die gemessene Schmelzetemperatur in der Schaumdüse betrug 250°C.
Es wurde ein gleichmäßig aufgeschäumtes, gemischtzelliges Profil erhalten.
Zur Messung der Dichte wurde aus dem Schaumprofil ein Probekörper mit den Abmaßen 25 x 25 x 10 mm hergestellt. Die nach DIN 53 420 bestimmte Dichte betrug 724 kg/m³. Der Gehalt an mineralischem Füllstoff betrug 13,5 Gew.-%, entsprechend 5 Gew.-% Al.

### Beispiel 2: PMMI-Schaumstoff mit Magnesiumhydroxyd

Mit gleicher Versuchseinrichtung wie in Beispiel 1 wurde ein Gemisch aus einer Polymethacryl-methylimid-Formmasse (PLEXIMID®PLEX 8806, Firma Röhm GmbH) mit 5 % Mg(OH)₂ und 25 % Talkum verarbeitet. Die gemessene Schmelze-Temperatur betrug 290°C.
Es wurde ein gleichmäßig aufgeschäumtes, gemischtzelliges Profil erhalten. Die nach DIN 53 420 bestimmte Dichte betrug 492 kg/m³. Der Mg-Gehalt betrug 2 Gew.-%.

## Patentansprüche

1. Verfahren zur Herstellung eines Schaumstoffes aus thermoplastischem Kunststoff durch Vermischen des Kunststoffes mit einem Treibmittel in der Schmelze und Erhitzen der Mischung bis zum Aufschäumen und Abkühlen unter die Erweichungstemperatur,
dadurch gekennzeichnet,
daß als Treibmittel im wesentlichen Magnesium- und/oder Aluminiumhydroxyd oder Kieselsäure eingesetzt wird.

2. Verfahren nach Anspruch 1, dadurch gekennzeichnet, daß die Mischung unter Druck erhitzt und durch Entspannung aufgeschäumt wird.

3. Verfahren nach Anspruch 1 oder 2, dadurch gekennzeichnet, daß die Mischung auf wenigstens 230°C erhitzt wird.

4. Verfahren nach Anspruch 3, dadurch gekennzeichnet, daß als thermoplastischer Kunststoff Polymethylmethacrylat oder ein Polymethacrylalkylimid-Polymer eingesetzt wird.

5. Verfahren nach einem oder mehreren der Ansprüche 1 bis 4, dadurch gekennzeichnet, daß eine Mischung mit einem Gehalt von 2 bis 50 Gew.-% an Magnesium- und/oder Aluminiumhydroxyd oder Kieselsäure hergestellt wird.

6. Verfahren nach einem oder mehreren der Ansprüche 1 bis 5, dadurch gekennzeichnet, daß die Mischung mittels einer Schneckenmaschine plastifiziert und homogenisiert und in einer Hohlform oder in einem Formkanal unter Druckentspannung aufgeschäumt und unter die Erweichungstemperatur abgekühlt wird.

7. Schaumstoff auf Basis eines geschäumten thermoplastischen Kunststoffes, gekennzeichnet durch einen Gehalt an Magnesium- und/oder Aluminiumoxid, -hydroxid bzw. oxidhydrat oder Siliciumdioxid.

8. Schaumstoff nach Anspruch 7, gekennzeichnet durch einen Mg-, Al- bzw. Si-Gehalt von 0,5 bis 20 Gew.-%.

9. Schaumstoff nach Anspruch 7 oder 8, gekennzeichnet durch eine Dichte von 100 bis 1500 kg/m³.
